Europäisches Patentamt

European Patent Office

Office européen des brevets

(11) Publication number: **0 427 540 A2**

# EUROPEAN PATENT APPLICATION

(21) Application number: 90312194.5

(22) Date of filing: 07.11.90

(51) Int. Cl.⁵: **G06F 13/24**, G06F 15/16

(30) Priority: 09.11.89 US 434067

(43) Date of publication of application:
15.05.91 Bulletin 91/20

(84) Designated Contracting States:
DE FR GB

(71) Applicant: International Business Machines
Corporation
Old Orchard Road
Armonk, N.Y. 10504(US)

(72) Inventor: Drerup, Bernard Charles
7201 Wood Hollow Drive, Apt. 309
Austin, Texas 78731(US)

Inventor: Peterson, James Chester
2107 Primrose Trail
Round Rock, Texas 78664(US)
Inventor: Pluth, Ronald Joseph
5230 Thunder Creek Road 149
Austin, Texas 78759(US)
Inventor: Voigt, Wendel Glenn
3220 Duval Road 2520
Austin, Texas 78759(US)

(74) Representative: Bailey, Geoffrey Alan
IBM United Kingdom Limited Intellectual
Property Department Hursley Park
Winchester Hampshire SO21 2JN(GB)

(54) Interrupt redirection.

(57) A system comprising multiprocessors interconnected by a bus, at least one processor being a host processor and at least one being a subsystem processor, having a mechanism allowing a subsystem processor to service interrupts generated by I/O devices which are not connected to the system bus, and therefore not directly accessible by the subsystem processor. The subsystem includes hardware registers for capturing from the host system processor, the current state of host system originating interrupts over said host system bus.

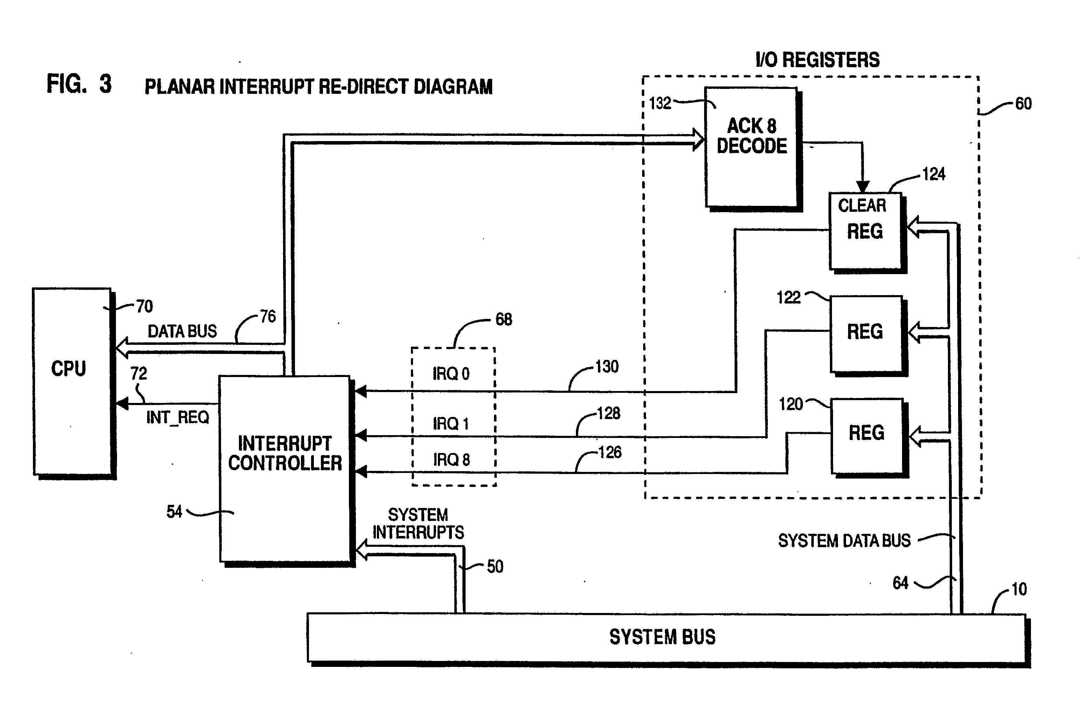

FIG. 3  PLANAR INTERRUPT RE-DIRECT DIAGRAM

## INTERRUPT REDIRECTION

The present invention relates to data processing systems. More specifically it relates to multiprocessor systems in which some of the processors have private I/O functions.

An industry segment has developed for providing add on feature cards having various functional capability to personal computers such as IBM Personal System/2 computers (IBM and Personal System/2 are trademarks of International Business Machines Corporation). Frequently such feature cards provide additional I/O ports, memory capability and the like. Recently, the industry has seen the introduction of feature cards with the basic constituents of another personal computer; that is, a processor, memory and means for connecting keyboard and display devices.

One such product family is available from Alloy Computer Products, Inc. which provides two versions of a personal computer on a card containing dedicated microprocessor, random access memory (RAM), and terminal and communications ports which may be installed in a server along with software and connected to low end terminals or personal computers, thus turning dumb terminals into intelligent terminals.

In such add on, enhanced systems, the additional feature card is connected to the host system planar, printed circuit board, via the system bus. The additional feature card may act as an upgrade to the host system by substituting the add on processor and memory capability and so forth for that originally provided with the host system, or the add on function may operate somewhat independently as a separate system for another, i.e. additional, user.

In the first situation, and sometimes in the latter, it may be necessary for the feature card processor, hereinafter subsystem processor, to service host system I/O devices.

In a particular system environment in which the present invention finds utility, the host processor is notified of an I/O service requirement by means of a single interrupt request signal (INTR-REQ). This INTR-REQ signal is generated by an interrupt controller from a plurality of up to 15 separate interrupt request lines (IRQ lines). Various I/O devices associated with both the host and subsystems, drive IRQ lines.

Most IRQ lines are driven to or from the system bus but not all. The signals not sent to or from the system bus are derived directly from 110 devices on the host system planar, that is not bus connected.

The host processor services an I/O device by accessing register(s) associated with it. The registers of the I/O devices which have IRQ lines not on the system bus can only be accessed from the host processor.

Further details about interrupt service may be found in "IBM Personal System/2 Hardware Interface Technical Reference", First Edition (May, 1988).

In order for a subsystem processor, such as the processor on an intelligent feature card, to service I/O devices, it must be able to access the register(s) associated with each such I/O device and be accessible to interrupts generated by those I/O devices in need of service.

A problem arises when specific I/O devices generate interrupt request lines that are not defined on the system bud. Such a situation may occur when an intelligent feature card such that of the present invention in used as an upgrade to the host system, i.e. in a mode in which the feature card effectively replaces the processor and/or memory originally present in the host system. A subsystem processor in order to service those requests requires some means for determining when those I/O devices require service.

Viewed from one aspect the invention provides a method of servicing by one processor interrupts generated by I/O devices private to another processor within a data processing system comprising multiple processors interconnected by a system bus, each processor being connected additionally to its own memory and I/O subsystems, comprising the steps of:

monitoring said private I/O device interrupt request lines;

changing states of registers associated with a servicing processor in response to state change in said private I/O device interrupt request lines;

passing register contents to said servicing processor's interrupt controller; and

resetting said registers when said private I/O device interrupt has been serviced.

The present invention enables a subsystem processor on an intelligent feature card to determine when non system bus defined I/O devices require service. The subsystem is provided with an interrupt controller which can receive interrupts appearing on the system bus. There is additionally provided an I/O register (IRQ register) the outputs of which drive specific interrupt lines to the local subsystem interrupt controller for those interrupt lines which are not conventionally driven to the system bus.

The contents of the IRQ register are under control of software executing in the host system processor. This software causes the contents of the IRQ register to change as a function of the state of the corresponding IRQ lines generated in the host system.

This software, IRQ Software, is invoked by the host interrupt controller when its IRQ lines go active. Irterrupt controller(s) in the subsystem bay be of the edge triggered or level sensitive type. If the interrupt controllers are the edge triggered type, the software will set IRQ register to inactive immediately after setting it active.

If, however, the interrupt controllers on the subsystem are level-sensitive, then an alternative method is used to set the IRQ register inactive. An I/O device only changes the level of its interrupt line to inactive upon access to one of its registers. The host system cooperating software, I/O Emulation Software, which monitors all such accesses can inform the IRQ Software of a register access.

This cooperating combination of hardware and software is described in copending European Application No. , a copy of which may be found on the file of the present application.

Thus, host system I/O Emulation Software invokes the IRQ Software whenever any IRQ line goes inactive, thereby enabling the subsystem IRQ register to be updated.

An embodiment of the invention will now be described, by way of example only, with reference to the accompanying drawings in which:

Fig. 1 is an overall schematic diagram of a system including an embodiment of the present invention;

Fig. 2 is a schematic logic block diagram of an feature card 30, Fig. 1;

Fig. 3 shows in greater detail, the data and control flow between system bus 10, I/O registers 60, interrupt controller 54 and processor 70 of Fig. 2;

Fig. 4 shows host processor 20 and its interconnection to system bus 10 for servicing private device I/O requests; and

Fig. 5 illustrates the logic followed by host processor 20 when redirecting interrupts.

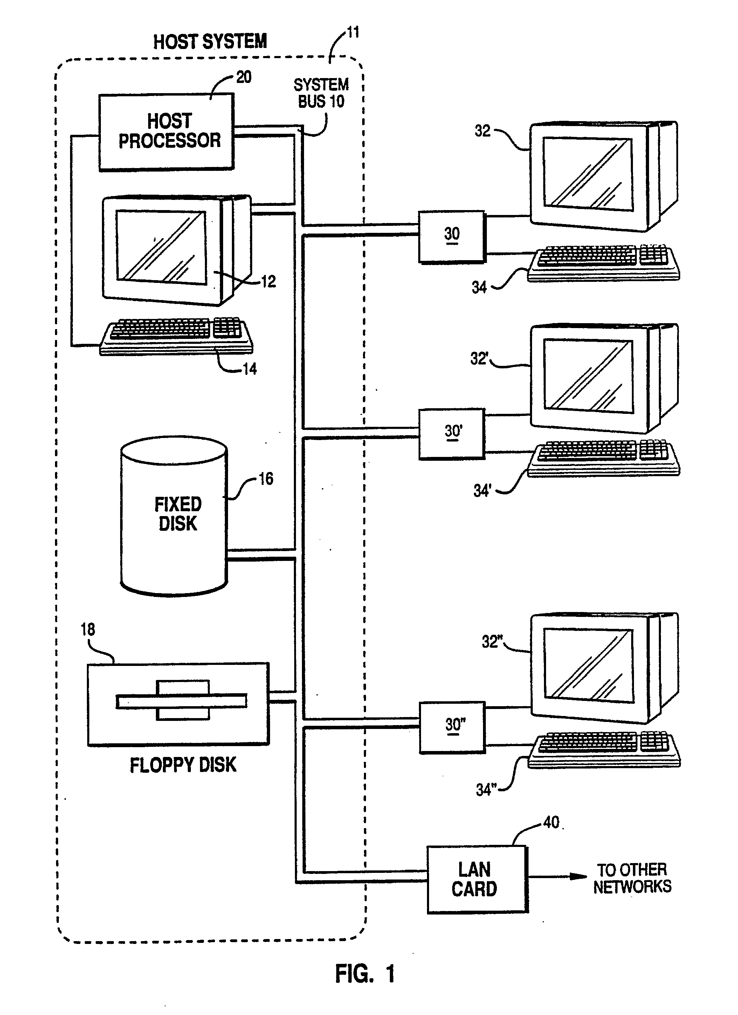

Refer now to Fig. 1. System bus 10 has interconnected therewith a conventional personal computer configuration which comprises video display 12, keyboard 14, hard file 16 and floppy disk 18 all under control of host system processor 20.

The present invention may be embodied in an feature card 30, and a plurality of such feature cards may be interconnected to system bus 10. Three feature cards, 30, 30$'$ and 30$''$, are shown for illustrative purposes. Each feature card 30, 30$'$ and 30$''$ includes a processor, memory and I/O connections by which a display 32, 32$'$ and 32$''$ and a keyboard 34, 34$'$ and 34$''$ may be connected.

System bus 10 may for example be the IBM Micro Channel bus to which a network card 40 may also be connected (Micro Channel is a trademark of International Business Machines Corporation). Thus, in addition to providing another user workstation(s) at host system 11, the combination of work stations may comprise a node of a network such as a local area network.

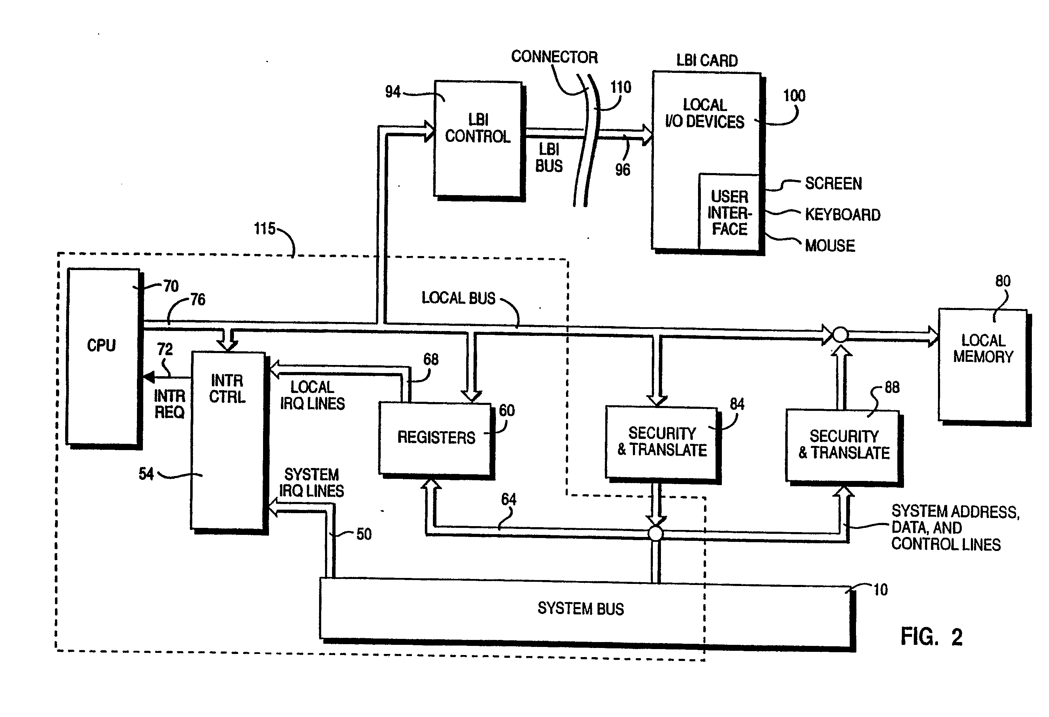

Fig. 2 shows in more detail, cards 30, 30$'$, 30$''$ from Fig. 1. System bus 10 provides interrupt request (IRQ) lines over bus 50 to interrupt controller 54. Signals generated by software executing in host system processor 20 are input to subsystem registers 60 from system bus 10 and bus 64. Register 60 contents are transferred over bus 68 to interrupt controller 54. Subsystem processor 70 receives input from interrupt controller 54 over line 72. Output from subsystem processor 70 is placed on bus 76 which is connected to interrupt controller 54, subsystem registers 60 and subsystem local memory 80.

The translate/security blocks 84 and 88 shown in Fig. 2 are used to control memory accesses between the feature card and the system bus 10 trans/sec block 84, controls the subsystem processor's access to the system bus. Trans/sec block 88 controls system bus access to the subsystem memory 80. Both trans/sec blocks are a collection of registers. Each register is associated with a range of source address space (input address) and contains information which is used to determine if the attempted access should be allowed, and if it is allowed, the destination address space (output address).

Bus 76 also connects subsystem processor 70 to system bus 10 via security and translate block 84. System bus 10 is connected via bus 64 to security and translate box 88 which is connected by bus 90 to subsystem local memory 80.

Output from subsystem processor 70 on bus 76 is provided to local, subsystem bus interface control 94 which provides input over local systen bus 96 to a selectable I/O device guest card 100. Selectable I/O device 100 also receives input from subsystem register block 60 over bus 104 and, as illustrated, provides an interface for interconnecting a video display (32, Fig. 1) and keyboard (34, Fig. 1) and other I/O devices such as a mouse.

Local bus 96 is is interconnected to guest card 100 at the local bus interface (LBI) indicated generally at 110.

Subsystem processor 70 has access through line 76 which is connected to local, bus interface control 94, which connects to local I/O devices 100 over local bus interface 96. Local I/O devices 100 consist of video display, keyboard and other I/O devices such as a mouse. The logic on local I/O devices 100 is physically separate from base feature card 30 and is connected by connector 110.

Refer now to Fig. 3 which shows in greater detail the system components enclosed in dotted line 115 in Fig. 2. Subsystem register block 60 includes interrupt registers 120, 122 and 124, each of which is connected to system bus 10 via bus 64. Outputs from registers 120, 122, 124 appear on lines 126, 128 and 130 respectively, which together make up bus 68, which is input to interrupt controller 54.

Output from interrupt controller 54 on bus 76 is received at decode block 132 within register block 60 and by subsystem processor 70.

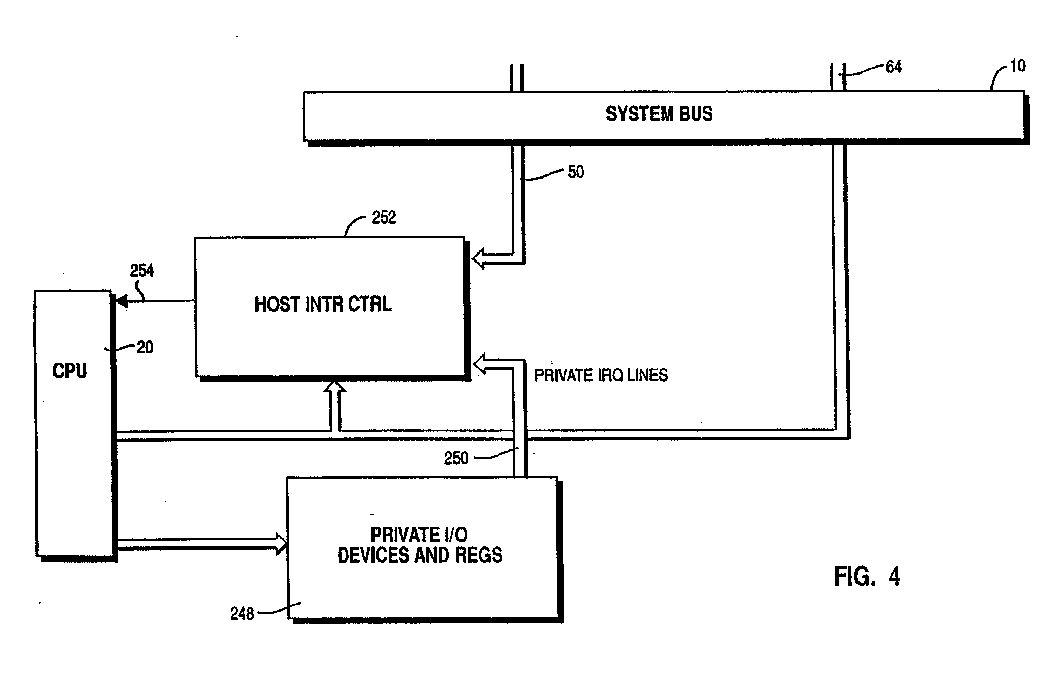

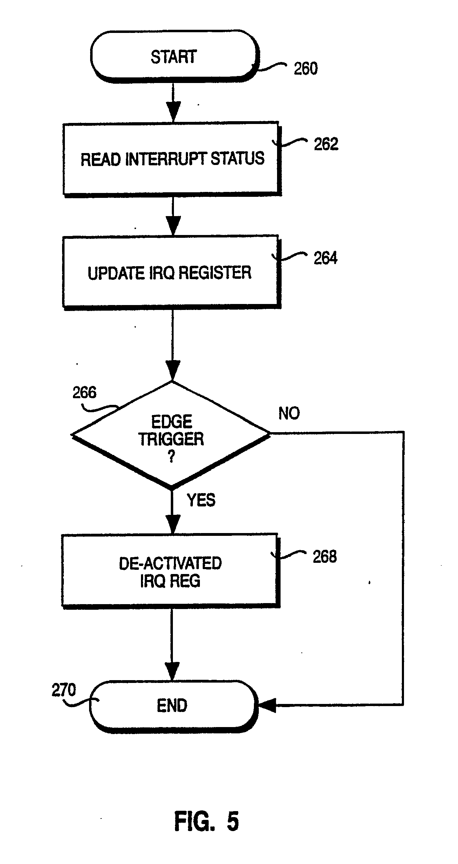

The operation of the present invention will be described having reference to the schematic block diagrams just described, in particular Fig. 3 and with reference to Figs. 4 and 5.

A subsystem (30, 30′ 30″), Fig. 1, including an embodiment of the present invention, has an interrupt controller which those having skill in the art will understand may be a pair or more of interrupt controllers. Each interrupt defined on the system bus may be directly fed into the interrupt controller 54. The three bit I/O register is represented by one bit registers 120, 122, 124, in Fig. 3. Outputs of these registers drive interrupt requests to the subsystem interrupt controller 54.

The IRQ register, 120, 122, 124 collectively, is programmed using data on system data bus 64 which is controlled by the host system 11.

In the exemplary embodiment, the feature card of the present invention is interconnected to the IBM Micro Channel bus in an IBM Personal System/2 computer which generates 15 separate interrupt request lines IRQ O-1, to 3-15. The host system, that is the II Personal System/2 machine has four planar I/O devices; a system timer, a keyboard, a real time clock, and a numeric coprocessor, which correspond to IRQ 0, IRQ 1, IRQ 8 and IRQ 13, respectively. These four interrupt levels are not defined on the Micro Channel or system bus.

Thus, the servicing subsystem uses the described technique to determine when these devices require service. It is unlikely that a subsystem processor would make use of IRQ 13 and it will not be further discussed. However, those having skill in the art will understand if use of the fourth IRQ line is desired, it could be handled in the same way as the three shown in Fig. 3; IRQ 0, IRQ 1, IRQ 8 on lines 126, 128, 130 respectively. All other IRQ lines 3 - 12 and 15 are input directly from system bus 10 over bus to subsystem interrupt controller 54.

Interrupt controller 54 thus passes through to subsystem processor 70 over line 72, interrupt requests derived from any IRQ line from system bus 10 over bus 50.

Thus, all IRQ lines except 0, 1, 8 and 13 are captured directly from system bus 10; while IRQ lines 0, 1 and 8 are indirectly placed on system data bus 64 by software executing in the host system processor.

Refer now to Fig.4 which illustrates host system 11 processor 20 and pertinent interconnections to system bus 10 and host system private I/O devices. For the sake of simplicity in this illustrative preferred embodiment, box 248 represents keyboard 14 of Fig. 1.

Those having skill in the art will appreciate that various other I/O devices may be associated with host system 11 as a private I/O device, i.e., one not directly interconnected to system bus 10.

When host system private I/O device 248 generates an interrupt request on bus 250 to host system interrupt controller 252, interrupt controller 252 notifies host system processor 20 over line 254, thereby invoking IRQ Sof tware which will be described below in connection with Fig. 5. IRQ Software accesses a register in host interrupt controller 252 and subsequent thereto subsystem I/O register (Fig. 3) via bus 64.

IRQ lines generated by non private devices such as display 12 or disk drives 16,18 in Fig. 1 would appear on system interrupt bus 50.

Logic followed by IRQ software running in host system processor 20 is shown in Fig. 5. The routine commences execution at block 260 as a result of either of two circumstances. It is invoked via the INTR-REQ line 254 whenever an IRQ line goes active. It is also invoked by I/O Emulation Software (described in previously ref erenced copendent European Application No. ) whenever subsystem processor 70 accesses an interrupting I/O device's registers At block 262, host processor 20 reads status information from its interrupt controllers(252, Fig. 4). At block 264 host processor 20 determines the proper state of the IRQ Register based on the status information derived at step 262, and writes it to the subsystem IRQ Register 120, 122 and 124.

At step 266 it determines if the subsystem interrupt controllers ˙are being used in edge-trigger or level-sense mode. This condition is dependent on the type of host system used. If the interrupt controllers 248 are in edge-trigger mode, then at step 268, any bits of IRQ Registers 120, 122, 124 which were set active are now set inactive. Block 260 then ends the routine.

If the host system is a Micro Channel machine, then an ACK 8 Decode 132 block of logic is required to retain proper interrupt request control. This block watches the control and data busses to determine if an Interrupt Acknowledge cycle of value 8 occurs. Upon recogniticn of such a state, the IRQ Register driving IRQ 0 is cleared ( set inactive).

The subsystem IRQ lines 126, 128 and 130, controlled from IRQ Register 120, 122 and 124 and cooperating host system IRQ software now signal subsystem interrupt controller 54 in response to private IRQ lines 250. Subsystem interrupt controller 54 then informs subsystem processor 70 of active IRQ lines. Subsystem processor 70 is thus informed of the private I/O devices needed for service.

While the present invention has been shown and described having reference to a particular preferred embodiment, those having skill in the art will understand that the above and other modificfitions and various changes in form and detail may be made without departing from the scope of the invention as claimed.

**Claims**

1. A method of servicing by one processor interrupts generated by I/O devices private to another processor within a data processing system comprising multiple processors interconnected by a system bus, where each processor being connected additionally to its own memory and I/O subsystems, comprising the steps of:
monitoring said private I/O device interrupt request lines;
changing states of registers associated with a servicing processor in response to state changes in said private I/O device interrupt request lines;
passing register contents to said servicing processor's interrupt controller; and
resetting said registers when said private I/O device interrupt has been serviced.

2. A method as claimed in Claim 1-wherein said monitoring step includes:
detecting a state change in said interrupt request lines associated with said private I/O devices.

3. A method as claimed in any of Claims 1 or 2 wherein said resetting step includes:
determining when said servicing processor has completed an emulated I/O cycle to said private I/O device; and
accessing registers associated with said servicing processor.

4. A data processing apparatus including multiple processors interconnected by a system bus, each processor being connected additionally to its own memory and I/O subsystems, comprising:
associated with a first servicing processor means for determining when I/O devices associated with another processor and interconnected to said system bus initiate interrupt requests;
means responsive to said means for determining for redirecting said interrupt requests from said another processor 0 said servicing processor; and
means for resetting said request signal initiated by said I/O devices when said interrupt request has been serviced.

5. A data processing apparatus for enabling one of a plurality of processors interconnected via a system bus to service interrupts generated by I/O devices not interconnected to the system bus comprising:
a servicing processor with an interrupt controller having IRQ registers connected thereto;
means associated with said one processor for changing states of said IRQ registers when states of corresponding IRQ lines private to said one processor change;
means in said first processor for emulating an I/O cycle performed by said servicing processor; and
means responsive to detection of completion of an I/O cycle by said emulating means for resetting said IRQ registers.

6. A data processor apparatus for interprocessor servicing of interrupts in a multi-processor environment in which processors are connected over a common system bus and wherein a processor may have associated therewith private I/O devices which have no interface to said common system bus comprising:
interrupt controllers associated with each processor adapted for directly receiving interrupt requests appearing on said common system bus;
IRQ registers connected to said interrupt controllers;
means in said processor having private I/O devices for controlling said IRQ registers as a function of states of interrupt request lines generated by private I/O devices.

7. A feature card connectable to a system bus including dedicated interrupt request lines and a data bus characterised by interrupt request registers responsive to said data bus for receiving and storing interrupt requests for processing by said feature card, whereby interrupt requests without a dedicated interrupt request line may be passed to said feature card.

8. A feature card as claimed in claim 7 including an interrupt controller for receiving interrupt requests directly from said dedicated interrupt lines and from said interrupt request registers.

**FIG. 1**

FIG. 2

# FIG. 3 PLANAR INTERRUPT RE-DIRECT DIAGRAM

SYSTEM BUS

HOST INTR CTRL

CPU

PRIVATE IRQ LINES

PRIVATE I/O
DEVICES AND REGS

FIG. 4

EP 0 427 540 A2

START — 260

READ INTERRUPT STATUS — 262

UPDATE IRQ REGISTER — 264

266 —
EDGE
TRIGGER
?

NO

YES

DE-ACTIVATED
IRQ REG — 268

270 — END

**FIG. 5**